# EUROPÄISCHE PATENTSCHRIFT

(11) **EP 2 268 523 B1**
(45) Veröffentlichungstag und Bekanntmachung des Hinweises auf die Patenterteilung: **31.08.2011**
(21) Anmeldenummer: 09732807.4
(22) Anmeldetag: 11.02.2009
(51) Int. Cl.: B60W 20/00, B60W 10/06, B60W 10/08, B60K 6/48, B60W 30/18, B60W 40/10, B60W 40/12, B60K 7/00, B60K 1/02

(54) **VERFAHREN UND STEUERUNGSMODUL ZUM STEUERN DES ANTRIEBSMODUS EINES HYBRIDANTRIEBS ZUR VERHINDERUNG VON RUCKBEWEGUNGEN**
METHOD AND CONTROL MODULE FOR CONTROLLING THE DRIVE MODE OF A HYBRID DRIVE TO PREVENT REVERSE MOVEMENTS
PROCÉDÉ ET MODULE DE COMMANDE POUR LA COMMANDE DU MODE D'ENTRAÎNEMENT D'UN MÉCANISME D'ENTRAÎNEMENT HYBRIDE, AFIN DE PRÉVENIR LES À-COUPS

(30) Priorität: 14.04.2008 DE 102008001159
(43) Veröffentlichungstag der Anmeldung: 05.01.2011
(73) Patentinhaber: Robert Bosch GmbH, 70442 Stuttgart (DE)
(72) Erfinder: FASSNACHT, Jochen, 75365 Calw (DE)
(86) Internationale Anmeldenummer: PCT/EP2009/051536
(87) Internationale Veröffentlichungsnummer: WO 2009/127452

(56) Entgegenhaltungen:
- EP-A- 0 922 600
- DE-A1-102006 008 641
- US-A1- 2003 183 430
- US-A1- 2007 272 456

## Beschreibung

### Stand der Technik

Die Erfindung betrifft das Gebiet der Steuerung von Hybridantrieben.

Hybridantriebe vereinigen einen Elektromotor und einen Verbrennungsmotor, die in verschiedener Weise kombiniert miteinander den Antrieb eines Fahrzeugs bewerkstelligen. Während der Elektromotor zur Abdeckung von dynamischen Belastungsspitzen und zur Energierückgewinnung beim Bremsen geeignet ist, dient der Verbrennungsmotor zur Umsetzung von Treibstoff und bietet eine hohe Leistungsabgabe, insbesondere für hohe Geschwindigkeiten oder hohe Fahrleistungen. Je nach Fahrerwunsch und Verkehrsbedingungen kann es hinsichtlich Effizienz oder hinsichtlich erwünschtem Fahrverhalten notwendig sein, neben dem Betrieb des Elektromotors als Antrieb den Verbrennungsmotor hinzuzuschalten oder, falls beide Antriebsaggregate (Elektromotor und Verbrennungsmotor) verwendet werden, den Verbrennungsmotor auszuschalten (beispielsweise zum Sparen von Treibstoff). Grundsätzlich bestehen ferner zwei weitere Fahrmodi: (1) keiner der beiden Aggregate wird zum Antrieb verwendet und (2) es wird nur der Verbrennungsmotor zum Antrieb verwendet. Die beiden Fahrmodi (1) und (2) liegen nicht im Fokus der Erfindung. Die Erfindung betrifft insbesondere eine Steuerung für die Betriebsmodi, bei denen nur der Elektromotor (Nur-Elektrobetrieb) oder der Elektromotor zusammen mit dem Verbrennungsmotor (Kombinationsbetrieb) als Antriebsaggregat verwendet wird.

Beim Umschalten zwischen diesen beiden Betriebsmodi (Nur-Elektrobetrieb, Kombinationsbetrieb) ergeben sich Ruckbewegungen. Durch Hinzufügen des Verbrennungsmotors, während der Elektromotor antreibt, sowie durch Abstellen des Verbrennungsmotors, wenn beide Antriebsaggregate (Verbrennungsmotor und Elektromotor) verwendet werden, entsteht eine Ruckbewegung durch ein schlagartiges Absinken des Antriebsmoments. Beim Hinzufügen des Verbrennungsmotors z.B. bei Parallelhybridantrieben, bei denen der Elektromotor auch als Anlasser für den Verbrennungsmotor verwendet wird, wird die Ruckbewegung dadurch ausgelöst, dass der Elektromotor nicht nur zum Antrieb verwendet wird, sondern auch Leissondern auch Leistung zum Starten des Verbrennungsmotors aufbringen muss. Das zum Starten erforderliche Moment steht somit schlagartig nicht mehr zum Antrieb zur Verfügung. Ferner verringert sich beim Abstellen des Verbrennungsmotors schlagartig das Antriebsmoment des Hybridantriebs um den Betrag, den der Verbrennungsmotor vorher zum Antrieb geleistet hat. In beiden Fällen können Ruckbewegungen entstehen, die das Fahrverhalten deutlich beeinträchtigen. Dies ist insbesondere bei stark beladenen Fahrzeugen bzw. steilen Fahrwegen unangenehm und kann unter anderem zu gefährlicheren Verkehrssituationen führen.

Gemäß dem Stand der Technik wird jedoch ein Änderungssignal, das beispielsweise von einem Fahrer oder von einer Fahrsteuerung stammt, unmittelbar umgesetzt, ohne die Konsequenzen der Antriebsmodusänderung abzuschätzen.

In der Druckschrift EP 1469195 B1 ist ein Verfahren zum automatischen Abschalten einer Brennkraftmaschine erwähnt, das vor dem automatische Abschalten dem Fahrer zunächst das voraussichtliche Abschalten signalisiert. Der Fahrer hat dann ein gewisses Zeitintervall Zeit, um das geplante Abschalten des Verbrennungsmotors aktiv zu unterbinden, indem der Fahrer einen entsprechenden Schalter einstellt. Zum einen erfordert dies die aktive Beteiligung des Fahrers, wodurch dieser möglicherweise vom Verkehrfluss abgelenkt wird, und zum anderen liegt es am Fahrer, die Konsequenzen des Abschaltens zu ermessen, wodurch sich eine substantielle Fehlerquelle ergibt.

Die gattungsbildende EP 0 922 600 A2 bezieht sich auf ein Antriebssteuerungssystem für ein Hybridfahrzeug und einer Anlassstrategie für die Verbrennungskraftmaschine. Der Elektromotor des Hybridantriebes ist nicht in der Lage, das gesamte erforderliche Drehmoment zum Antrieb des Fahrzeugs einerseits und zum Anlassen der Verbrennungskraftmaschine andererseits aufzubringen. Es wird dann unter anderem die Maßnahme ergriffen, dass das Drehmoment begrenzt wird, dass ein Reservedrehmoment übrig bleibt, was zum Anlassen der Verbrennungskraftmaschine genutzt werden kann.

Während des Anlassschrittes wird ein Herunterschalten des Getriebes durch eine Überwachung verhindert.

US 2003/0183430 A1 bezieht sich auf ein Steuerungssystem für ein Hybridantrieb sowie ein Verfahren zur Steuerung des Hybridantriebes. Gemäß dieser Lösung wird die Verbrennungskraftmaschine unter bestimmten Umständen nicht abgeschaltet, beispielsweise bei der Passage einer Steigung oder bei kalter Verbrennungskraftmaschine.

Es ist daher eine Aufgabe der vorliegenden Erfindung, einen Steuerungsmechanismus für den Antriebsmodus eines Hybridantriebs vorzusehen, mit dem sich ein besseres Fahrverhalten realisieren lässt.

### Offenbarung der Erfindung

Die Erfindung erlaubt die automatische resultatbezogene Umschaltung des Antriebsmodus und verhindert Antriebsmodusänderungen, die zu einem unerwünschten Fahrverhalten führen. Gleichzeitig wird die Effizienz des Antriebs nicht wesentlich beeinträchtigt. Die Signifikanz des erfindungsgemäßen Verfahrens bei der Beurteilung des Fahrverhaltens kann anhand des folgenden Beispiels verdeutlicht werden. Fährt beispielsweise ein stark beladenes P2-Hybrid-Fahrzeug auf einer steilen Rampe (beispielsweise Garageneinfahrt) mit der höchsten Übersetzung unter ausschließlicher Verwendung des Elektromotors, so würde ein kurzfristiger Beschleunigungsversuch das Fahrverhalten wie folgt massiv beeinträchtigen. Gibt der Fahrer auf der Rampe Gas, um zu beschleunigen, wobei jedoch das Moment der elektrischen Maschine nur für eine leichte Beschleunigung reicht, jedoch nicht mehr für einen zusätzlichen Start des Verbrennungs motors, so wirde das Fahrseug die getriebeseitige hupplung offnen, um den Verbrennungsmotor zu starten, um somit mit dem zusätzlichen Antriebsmoment des Verbrennungsmotors das Gesamtantriebsmoment zu stützen. Die Öffnung der Kupplung oder allein die Verwendung des Elektromotors als Starter würde zu einer Ruckbewegung und im schlimmsten Fall zu einem ungewollten Zurückrollen des Fahrzeugs führen. In gleicher Weise würde das Abstellen des Verbrennungsmotors, beispielsweise aufgrund geringer Fahrgeschwindigkeit, die Gesamtantriebsleistung schlagartig reduzieren, wodurch das Fahrzeug zurückrollt.

Erfindungsgemäß wird jedoch auf einfache Weise eine Ruckbewegung und vor allem ein Rückrollen vermieden, indem Resultat bezogen die Stärke der potentiellen Rückbewegung durch Bestimmen eines Nbmentenfehlbetrags erfasst wird, um anhand des Fehlbetrags abzuschätzen, ob eine Betriebsmodusänderung zu einer übermäßigen Ruckbewegung oder zu einer noch zu tolerierenden Ruckbewegung führen würde. Das erfindungsgemäße Verfahren ist nicht nur in der Lage, eine Ruckbewegung zu verhindern, die durch das Hinzuschalten des Verbrennungsmotors erzeugt wird, sondern auch die durch das Abschalten des Verbrennungsmotors erzeugt wird. Beispielsweise kann eine Steuerung feststellen, dass bei einem kombinierten Elektromotor/Verbrennungsmotorbetrieb die gewünschte Beschleunigung (vergleiche Gaspedalstellung) sich auch bei abgeschaltetem Verbrennungsmotor realisieren ließe. Dies ist jedoch beispielsweise bei stark beladenen Fahrzeugen nicht der Fall, da gemäß dem Stand der Technik die Entscheidung über das Abschalten des Verbrennungsmotors nicht anhand des Belastungszustands, d.h. der Beladung, festgestellt wird. Erfindungsgemäß wird jedoch die erforderliche Antriebsleistung bzw. das erforderliche Antriebsmoment unter Berücksichtigung der Belastung ermittelt. Dadurch wird dem gewünschten Fahrverhalten bei erhöhter Belastung, d.h. beispielsweise hohe Steigerung und/oder starke Zuladung Rechnung getragen. Besonders bevorzugt wird die Erfindung zur zumindest temporären Verhinderung eines Verbrennungsmotorstopps bei entsprechend erfassten Situationen eingesetzt.

Erfindungsgemäß wird somit ein Antriebsmodus-Änderungssignal erfasst, das von einem Bedienschalter oder von einer übergeordneten Antriebssteuerung stammen kann. Das Antriebsmodus-Änderungssignal entspricht dem Steuerungswunsch, eine Antriebsmodusänderung herbeizuführen und kennzeichnet somit eine vom Fahrer (oder von der Fahrzeugssteuerung) geplante bzw. gewünschte Antriebsmodusänderung. Anstatt, wie im Stand der Technik, die Antriebsmodusänderung unmittelbar und unbedingt durchzuführen, wird erfindungsgemäß zunächst ein Momentenfehlbetrag bestimmt bzw. abgeschätzt, der durch die Antriebsmodusänderung auftreten würde. Erfindungsgemäß wird der Momentenfehlbetrag mit einem Schwellwert verglichen, wobei der Schwellwert die Toleranzschwelle des Fahrers und somit das gewünschte Fahrverhalten angibt. Bei einem sehr hohen Schwellwert, der erst bei sehr starkem Antriebsmoment-Abfall oder sehr starken Ruckbewegungen, d.h. bei einem sehr hohen Momentenfehlbetrag auftreten würde, würde der Antrieb zwar effizienter arbeiten, jedoch das Fahrgefühl stark beeinträchtigen. Bei einem sehr geringen Schwellwert hingegen würde auf eine Effizienzsteigerung zu Gunsten eines verbesserten Fahrverhaltens verzichtet werden. Die Höhe des Schwellwerts ist somit ein Grad für die Güte des Fahrverhaltens bzw. für die EfBzienz, wobei Fahrverhalten und Effizienz entgegengesetzte Maßnahmen erfordern und somit eine Kompromissentscheidung getroffen werden muss. Insbesondere bei der Verhinderung eines Verbrennungsmotorstopps ergibt sich bei (hohen) Schwellwerten eine Sicherung beispielsweise gegen Zurückrollen.

Erfindungsgemäß wird statt der sofortigen Ausführung der Antriebsmodusänderung beim Auftreten eines Antriebsmodus-Änderungssignals die Antriebsmodusänderung blockiert, wenn der Momentenfehlbetrag über dem Schwellwert liegt. Andernfalls, falls der Schwellwert nicht überschritten ist bzw. der Momentenfehlbetrag unter dem Schwellwert liegt, wird das Antriebsmodus-Änderungssignal an die entsprechende Steuerung des Hybridantriebs weitergegeben, um die entsprechende Änderung des Antriebsmodus auszuführen. Ferner ist die Verhinderung bzw. Blockierung eines Antriebsmoduswechsels nur für ein vorbestimmtes Zeitintervall wirksam, beispielsweise bei einem gewünschten Verbrennungsmotorstart.

Wie bereits bemerkt ist die Erfindung zur Anwendung aufzwei Betriebsarten fokussiert: Zu einen der kombinierte Betrieb des Elektromotors und des Verbrennungsmotors, wobei beide zum Antrieb beitragen, und zum anderen der Betriebsmodus, in dem nur der Elektromotor zum Antrieb verwendet wird und der Verbrennungsmotor ausgeschaltet (bzw. abgekoppelt) ist. Somit werden im Wesentlichen zwei verschiedene Übergänge betrachtet, die mit dem Antriebsmodus-Änderungssignal einhergehen: ein erster Übergang von Nur-Elektromotorbetrieb zum Kombinationsbetrieb oder, als zweiter Übergang, der Übergang vom Kombinationsbetrieb zum Nur-Elektromotorbetrieb. Wie bereits bemerkt, wird als Kombinationsbetrieb die gleichzeitige Verwendung von Verbrennungsmotor und Elektromotor zum Antrieb bezeichnet (beide Motoren bzw. Aggregate liefern Antriebsleistung), und als Nur-Elektromotorbetrieb wird der Betriebsmodus bzw. die Betriebsart bezeichnet, in dem nur der Elektromotor zum Antrieb beiträgt und der Verbrennungsmotor abgeschaltet ist und auch nicht aufandere Weise zum Antrieb in wesentlicher Weise beiträgt.

Zur Abschätzung, ob die Antriebsmodusänderung blockiert werden soll, oder nicht, wird ein Momentenfehlbetrag bestimmt, indem ein Belastungsmoment erfasst wird, und indem eine Momentverringerung, die sich durch die Antriebsmodusänderung ergibt bzw. ergerben würde, erfasst wird. Wenn zunächst der Elektromotor alleine arbeitet (Nur-Elektromotorbetrieb), und der Verbrennungsmotor gemäß Änderungssignal hinzugeschaltet werden soll, so bestimmt sich die Momentverringerung im Wesentlichen durch das Startmoment, welches vom Elektromotor an den Verbrennungsmotor übertragen wird, um den Verbrennungsmotor zu starten. Es ist ersichtlich, dass der Betrag des Startmoments nicht mehr für den Antrieb zur Verfügung steht, wenn das Startmoment an den Verbrennungsmotor übertragen wird. Zusätzlich ergibt sich als Momentverringerung ein Fehlmoment, das sich durch Abkoppeln des Elektromotors vom Abtrieb ergibt, falls dies vorgesehen ist, und falls der Startvorgang die alleinige Verbindung zwischen Verbrennungsmotor und Elektromotor sowie die Abtrennung des Abtriebs per Kupplung vorsieht. Der Momentenfehlbetrag ist hier nicht abschließend behandelt, sondern kann auch weitere mit der Antriebsmodusänderung verknüpfte Momentfehlbeträge umfassen.

Erfindungsgemäß umfasst das Bestimmen des Momentenfehlbetrags eine Abschätzung bzw. "Modellierung" des gesamten Systems, wobei ein Belastungsmoment bzw. eine Belastungssituation des Antriebs berücksichtigt wird. Das Belastungsmoment bzw. die Belastungssituation gibt das Moment (oder die zusätzliche Momentenerhöhung) wieder, das bzw. die notwendig ist, um eine Geschwindigkeit oder Geschwindigkeitsänderung des Fahrzeugs vorzusehen. Hierzu wird eine Geschwindigkeit (oder Geschwindigkeitsänderung) von einem Fahrer oder einem Fahrpedal oder von einer Steuerung, bsp. einer aktiven Fahrsteuerung vorgesehen. Daraufhin wird ermittelt, ob die neue Geschwindigkeit oder die Geschwindigkeitsänderung zu einer Antriebsmodusänderung führen würde. Erfindungsgemäß werden die Folgen der (geplanten) Antriebsmodusänderung abgeschätzt, wie im weiteren beschrieben ist, und gegebenenfalls wird die Antriebsmodusänderung erfindungsgemäß blockiert, um eine Ruckbewegung zu verhindern.

Das Belastungsmoment dient zur "Modellierung" und wird verwendet, um die für die Geschwindigkeitsänderung erforderliche Steigerung des vom Hybridantrieb geleisteten Antriebsmoments vorzusehen, beispielsweise um den Momentenfehlbetrag zu reduzieren oder vollständig auszugleichen. Insbesondere werden hierzu Steigung der Fahrbahn, Beladung (Gewicht) des Fahrzeugs oder eine Kombination hiervon vorgesehen und verwendet. Das Belastungsmoment kann eine Größe sein, die einem Drehmoment entspricht, das zum Vorsehen der Geschwindigkeitsänderung oder zum Beibehalten einer Geschwindigkeit notwendig ist.

Die Steigerung des Antriebsmoments kann auch kleiner sein als der Momentenfehlbetrag. Die Steigerung des Antriebsmoments kann ein vorbestimmter Wert sein, der eingestellt wird, um die zugehörige Geschwindigkeitsänderung zu erfassen, wodurch das Belastungsmoment erfasst wird. In Kombination oder alternativ zu der aktiven Erfassung des Belastungsmoments durch Erhöhen des Antriebsmoments und Erfassen der zugehörigen Differenz in der Geschwindigkeitsänderung, d.h. Zunahme der Beschleunigung, wird vorzugsweise die Belastung geschätzt wie im weiteren ausgeführt ist, d.h. beispielsweise durch Erfassung der Steigung, der Fahrbahnebenheit, der Fahrzeugmasse durch Ermitteln von Zuladungen, des Luftwiderstands, Reibungsmomente, und ähnlicher Belastungsursachen. Vorzugsweise werden gibt das Belastungsmoment aktuelle Belastungen wieder, die den momentanen Fahrbetrieb beeinflussen. Diese zur Erfassung der Belastung ermittelten Größen können gemessen werden (z.B. die Steigung, Fahrbahnebenheit) oder können geschätzt/errechnet werden (z.B. Schätzung der Zuladung durch Erfassen der Sitzbelegung / Belegung der Anhängerkupplung). Im allgemeinen ist das Belastungsmoment ein Maß für die Belastung des Hybridantriebs durch die Bewegung des Fahrzeugs.

Eine geeignete Ausführung des Verfahrens umfasst die Erhöhung des Belastungsmoments, welches das geforderte Lastmoment oder Abtriebsmoment widerspiegelt, um einen entsprechenden Betrag, der der Widerstandserhöhung aufgrund von z.B. der Fahrbahnsteigung, der Fahrbahnunebenheiten oder sonstigen Effekten entspricht, und umfasst das entsprechende Blockieren bzw. Verhindern der Abschaltung des Verbrennungsmotors bei einem Belastungsmoment, das über einem bestimmten Betrag liegt. Der Momentenfehlbetrag, der erfindungsgemäß mit einem Schwellwert verglichen wird, kann somit vor dem Vergleichen einem Wert gleichgesetzt werden, der das Belastungsmoment wiedergibt. Erfindungsgemäß kann der Vergleich eines (erhöhten) Belastungsmoments mit einem bestimmten Betrag (bsp. einem Maximalbetrag) anstatt oder in Kombination mit dem Vergleichen des Momentenfehlbetrags ausgeführt werden, wobei der Schritt des Blockierens ausgeführt wird, wenn das Belastungsmoment über dem bestimmten Betrag (bsp. ein vordefinierter Betrag) liegt.

Falls das Antriebsmodus-Änderungssignal den zweiten Übergang kennzeichnet, d.h. Übergang vom Kombinationsbetrieb zum Nur-Elektromotorbetrieb, so entspricht das Antriebsfehlmomcnt dem Moment, das der Verbrennungsmotor vor der Änderung zum Antrieb beigetragcn hat, und dass nach Abschalten des Verbrennungsmotors nicht mehr zur Verfügung steht. Insbesondere die Anwendung des Verfahrens auf den zweiten Übergang führt zu einer wesentlichen Verbesserung der Fahrsicherheit, da eine Ruckbewegung bzw. ein Zurückrollen verhindert wird, wie es durch eine plötzlich auftretende Momentverringerung (als Ergebnis des Verbrennungsmotorstopps trotz unzureichender Leistung des Elektromotors) auftreten würde. Gegebenenfalls sind bei der Vorabberechnung/-ermittlung des zu erwartenden Momentenfehlbetrags neben dem Ausfall der Drehmomenterzeugung durch den Elektromotor weitere Kupplungsreibungseffekte als Fehlmoment zu berücksichtigen. Wie bereits bemerkt sind als Momentenfehlbetrag alle Momente zu berücksichtigen, die mit der Antriebsmodusänderung einhergehen. Insbesondere wird ein ermittelter Neigungswert berücksichtigt, der ein Maß für die Momentbelastung aufgrund des zu bewegenden Fahrzeuggewichts angibt, die gegebenenfalls zu einer Momentanforderung (Fahrpedal/Tempomat/Fahrsteuerung) hinzutritt.

Gemäß einer bevorzugten Ausführungsform der Erfindung wird der Momentenfehlbetrag als Summe des Belastungsmoments und des Startmoments (im Falle des Übergangs vom Nur-Elektrobetrieb zum Kombinationsbetrieb) bzw. als Summe des Belastungsmoments und des Antriebs-Fehlmoments (im Falle des Übergangs vom Kombinationsbetriebs zum Nur-Elektrobetrieb) vorgesehen. Falls die Änderung des Antriebsmodus mit dem Abkuppeln des Antriebs (auch wenn nur temporär) verknüpft ist, so bestimmt der Momentenfehlbetrag in diesem Fall die Stärke des Rückrollens oder des Abfallens (zweiter Übergang), bzw. die Stärke der Ruckbewegung (erster Übergang). Falls das Belastungsmoment auch während der Antriebsmodusänderung durchgehend vom Elektromotor kompensiert werden kann, so kann der Momentenfehlbetrag als Startmoment bzw. als Antrieb-Fehlmoment vorgesehen werden, oder, bevorzugt kann der Schwellwert um einen entsprechenden Grundwert geändert werden. Der Grundwert des Schwellwerts entspricht in diesem Fall dem bereits vom Elektromotor kompensierten Momentenfehlbetrag.

Das Belastungsmoment, das als Komponente des Nbmentenfehlbetrags vorgesehen werden kann, wird beispielsweise durch die Ermittlungen der Neigung des Fahrzeugs erkannt, wobei die Fahrzeugneigung mittels eines Neigungssensors, der dafür vorgesehen ist, mittels des Winkelsignals einer bereits vorgesehenen Überschlagserkennung oder mittels eines Winkelsignals einer Diebstahlsicherung erfasst werden. Im Falle der Überschlagserkennung oder der Diebstahlsicherung können bereits im Fahrzeug vorgesehene Komponenten verwendet werden, wobei das dort verwendete bzw. erzeugte Winkelsignal wieder verwendet werden kann. In diesem Sinne können die Winkelsensoren der Überschlagserkennung oder Diebstahlsicherung zur Erfassung des Winkelsignals verwendet werden, in Kombination mit ihrer Funktion als Winkelgeber für die Überschlagserkennung oder für die Diebstahlsicherung. In gleicher Weise kann ein Winkelsignal der Überschlagserkennung oder der Diebstahlsicherung verwendet werden, das bei Berechnungsprozessen innerhalb der Diebstahlsicherung oder der Überschlagserkennung verwendet wird. Beide Signale können miteinander kombiniert werden, beispielsweise um ein redundantes Signal vorzusehen oder können je nach Genauigkeit bzw. Verlässlichkeit gewichtet kombiniert werden.

Ferner kann das Belastungsmoment erfasst werden, indem die Trägheit des Fahrzeugs ermittelt wird. Hierbei wird vorzugsweise eine Beschleunigung erfasst, sowie ein zugehöriges Antriebsmoment. Der Quotient aus Beschleunigung und hierzu notwendigem Antriebsmoment gibt ein Maß für die Belastung durch die Fahrzeugmasse bzw. ein Maß für die Zuladung. Das Beschleunigungssignal kann mittels eines eigens dafür vorgesehen Sensors erzeugt werden, oder kann von einer Antischlupfregelung, einer ESP-Steuerung, einer Antriebs- bzw. Fahrsteuerung vorgesehen werden, indem beispielsweise der Sensor der jeweiligen bereits vorgesehenen Komponente mit verwendet wird, oder indem in den jeweiligen Steuerungen bzw. Regelungen vorgesehene Signalwerte angezapft bzw. erfasst werden.

Um die Trägheit des Fahrzeugs zu erfassen, um somit eine Abschätzung des Belastungsmoments abzugeben, können Signale von Sensoren in Fahrzeugsitzen verwendet werden, die auch zur sonstigen Belastungserkennung bzw. zur Überprüfung verwendet werden, ob eine auf dem Fahrzeugsitz befindliche Person angeschnallt ist. Da die Überprüfung, ob eine auf dem Fahrzeugsitz befindliche Person angeschnallt ist, die Belastungserfassung des Sitzes umfasst, um zu ermitteln, ob denn der Sitz überhaupt belegt ist, kann dieses Belegungssignal im obigen Sinne als Belastungs(-abschätzungs)signal verwendet werden. Alternativ oder in Kombination hierzu kann ein Signal ausgewertet werden, das die Ankopplung eines Anhängers kennzeichnet, beispielsweise ein Signal, das einen eingesteckten Stecker für eine Anhängerbeleuchtung kennzeichnet. Ferner können Masse- oder Trägheitssignalwerte einer Antischlupfregelung, einer ESP-Steuerung oder einer Antriebssteuerung verwendet werden, die derartige Trägheitswerte für ihre eigene Zwecke verwenden.

Auch der Einsatz eines "Vollladeschalters", welcher vom Fahrer betätigt werden muss, kann zur Feststellung der erhöhten Fahrzeugbeladung eingesetzt werden. Wird ein derart eingegebenes (oder von einer Steuerung vorgesehenes) Vollladesignal abgegeben, so wird ein vorbestimmtes Belastungsmoment bzw. ein vorbestimmter Belastungszustand angenommen, das gegebenenfalls zu einem bereits erfassten oder geschätzten Belastungsmoment hinzuaddiert wird. Das Belastungsmoment entspricht in diesem Falle einer Vollbeladung des Fahrzeugs. Eine andere Alternative zur Bildung des Belastungssignals ist die Verwendung von Gelände oder Straßensteigungsdaten von Navigations- oder Verkehrsleitsystemen zur Bildung des Belastungssignals. Aus Daten des Navigations- oder Verkehrsleitsystems wird somit die (vorzugsweise aktuell auf das Fahrzeug wirkende) Fahrbahnneigung berechnet, aus der sich das Belastungsmoment ergibt.

In gleicher Weise kann das abgegebene Gesamtantriebsmoment aus entsprechenden Leistungswerten einer Fahrsteuerung, einer Antischlupfregelung, einer ESP-Steuerung oder einer Antriebssteuerung verwendet werden. Im Falle der Verwendung eines Sitzbelegungssignals oder eines Anhängerkupplungssignals können voreingestellte Schätzwerte verwendet werden, beispielsweise ein Norm-Szenario, ein Best-Case- oder ein Worst-Case-Szenario. Ein Norm-Szenario wäre beispielsweise die Annahme von 75 kg pro belegtem Sitz, eine Worst-Case-Annahme wäre beispielsweise Annahme eines maximal beladenen angekoppelten Hängers und ein Best-Case-Szenario wäre die Annahme eines Grenzgewichts, ab dem ein belegter Fahrzeugsitzsensor den Belegungszustand angibt.

Zur Erfassung des Belastungsmoments kann ferner einen Fahrbahnbeschaffenheitswert erfasst werden, beispielsweise durch eine Antischlupfregelung, eine ESP-Steuerung oder eine Antriebssteuerung, die Fahrbahnrauhigkeit in ihrer Funktion als Sicherheitsmodul oder Steuerungsmodul berücksichtigen. Ferner kann ein voreingestellter Normwert oder ein Maximalwert angenommen werden, wenn ein Off-Road-Schalter betätigt ist, mit dem sich entsprechende Fahreigenschaften von einem Bediener einstellen lassen. Ist der Off-Road-Schalter aktiviert, so wird erfindungsgemäß davon ausgegangen, dass auf Grund der Fahrbahnbeschaffenheit ein hohes Belastungsmoment vorliegt. Als weitere Komponente des Belastungsmoments kann die Geschwindigkeit des Fahrzeugs ermittelt werden, um die Belastung durch den Luftwiderstand mit einzubeziehen.

Vorzugsweise sind die oben genannten Bestimmungsmöglichkeiten für das Belastungsmoment einzelne Komponenten, die sich beispielsweise gewichtet kombinieren lassen, beispielsweise die Addition eines Normwerts bei aktivierten Off-Road-Schalter, mit einem Normgewichtswert eines belegten Fahrzeugsitzes mit einem Winkelsignal, das die Fahrbahnsteigung angibt. Insbesondere kann bei einem Antriebsmoduswechsel von Kombibetrieb aufNur-Elektroantrieb der Ladezustand des Energiespeichers des Elektroantriebs bei der Ermittlung des Momentemehlbetrags berücksichtigt werden. Je stärker der Energiespeicher (Traktionsbatterie) entleert ist, desto weniger Antriebsleistung bzw. Antriebsmoment steht bei Nur-Elektrobetrieb zur Verfügung. Ferner wird vorzugsweise ein aktuell angefordertes Antriebsmoment berücksichtigt, um das das Antriebsfehlmoment erhöht wird.

Vorzugsweise wird ferner der gewünschten Beschleunigung, die durch eine Gaspedalstellung angegeben ist, Rechnung getragen. Hierbei kann entweder das Belastungsmoment oder der Schwellwert verändert werden, da beispielsweise bei stark durchgedrücktem Gaspedal auch ein starker Momentsprung bei Antriebsmodusänderungen auftritt. So kann beispielsweise der Stellwinkel des Gaspedals negativ proportional zum Schwellwert sein, so dass bei einem starken Gaspedal der Schwellwert zusätzlich verringert wird, um einen starken Momentsprung, welcher mit einer hohen Beschleunigung einhergeht, auch bei sonst geringerem Belastungsmoment zu verhindern. Der Schwellwert liegt vorzugsweise zwischen 0 und einem Wert, der für eine starke Ruckbewegung steht. Die Ruckbewegung kann mittels des Betrags der mit der Antriebsmodus einhergehenden Geschwindigkeitsverringerung oder einer damit einhergehenden zeitbezogenen Geschwindigkeitsverringerung (d.h. negative Beschleunigung) dargestellt werden. Da der Momentemehlbetrag mit dem Schwellwert verglichen wird, kann sich eine Änderung des Momentemehlbetrags auch entsprechend in einer (umgekehrten) Änderung des Schwellwerts niederschlagen, oder umgekehrt. Vorzugsweise wird ein Komparator oder ein entsprechend programmierter Mikroprozessor zum vergleichen verwendet.

Das Antriebsmodus-Änderungssignal kann entweder von einem Bedienschalter erzeugt werden, das von einem Fahrer bedient wird, um eine Betriebsmodusänderung einzuleiten. Das erfindungsgemäße Verfahren verhindert vom Fahrer gewünschte Betriebsmodusänderungen, die nicht an die vorliegende Beladung bzw. vorzusehende Beschleunigung angepasst sind. Zum anderen kann das Antriebsmodus-Änderungssignal innerhalb einer Fahrzeugsteuerung oder Antriebssteuerung auftreten oder von dieser ausgegeben werden, die gemäß einem Betriebsprogramm den Betriebsmodus des Hybridmotors steuert. Derartige Steuerungen sehen vorzugsweise auch Kupplungsvorgänge und Startvorgänge vor und steuern die entsprechenden Komponenten (im Falle des Startens den Elektromotor oder gegebenenfalls einen dafür vorgesehenen Anlasser). Die Antriebssteuerungen verarbeiten gemäß einem Ablaufprogramm Einstellungen, Messwerte und Zustände des Antriebs, von Sensoren oder von Eingabevorrichtungen.

Wenn vom Nur-Elektromotorbetrieb auf den Kombinationsbetrieb umgestellt werden soll (erster Übergang), wird der Elektromotor kurzfristig als Starter für den Verbrennungsmotor verwendet. Zur Schätzung des Moments, das bei dem Startvorgang vom Elektromotor auf den Verbrennungsmotor übertragen wird, können voreingestellte Werte liegen, die gegebenenfalls durch Verbrennungsmotortemperatur, Alter des Verbrennungsmotors, Winkelstellung und ähnliche Betriebsparameter des Verbrennungsmotors angepasst werden können. Erhöht erfahrungsgemäß ein Wert eines dieser Betriebsparameter das notwendige Startmoment des Verbrennungsmotors, so kann das anzunehmende Startmoment entsprechend erhöht werden. Wie bereits bemerkt kann auf Grund des Vergleichs zur Kompensation dieser Werte auch der Schwellwert entsprechend verändert werden, und zwar in umgekehrter Richtung, wie der Momentenfehlbetrag verändert wird, welcher das Startmoment umfasst.

Beim ersten Übergang wird vorzugsweise nicht dauerhaft, sondern nur für ein vorbestimmtes Zeitintervall blockiert, das mit dem Erfassen des Betriebsmodus-Änderungssignals oder mit dem Blockieren beginnt. Hierdurch wird das Hinzufügen des Verbrennungsmotors zur Drehmomenterzeugung nicht durchgehend blockiert, unabhängig von anderen Zuständen oder Größen, die das erfindungsgemäße Verfahren beeinflussen. Ferner wird vorzugsweise die Blockierung des Startens des Verbrennungsmotors bei Drehmomentanforderungen aufgehoben oder beendet, die deutlich größer Null bzw. größer als ein vorbestimmter Drehmomentanforderungs-Schwellwert sind. Beispielsweise bei einer Fahrpedalstellung, die einer starken Drehmomentanforderung entspricht, wird somit sichergestellt, dass das Verfahren den Verbrennungsmotorstart nicht blockiert, obwohl dieser offensichtlich (durch die starke Drehmomentanforderung) gewünscht ist. Auf diese Weise wird nur bei einem geringen Momentenfehlbetrag der Verbrennungsmotor blockiert, um eine Ruckbewegung zu verhindern, die sich durch den Startvorgang bzw. durch das Kuppeln ergibt; ist der Momentenfehlbetrag deutlich größer (d.h. der Elektromotor kann das angeforderte Antriebsmoment nicht alleine aufbringen), so wird die Antriebsmodusänderung zugelassen. Dies kann beispielsweise als Momentenfehlbetrag-Fenster implementiert werden, das dem Vergleich zu Grunde liegt, und außerhalb dessen die Antriebsmodusänderung zugelassen wird. Insbesondere die obere Grenze (bsp. realisiert durch einen weiteren, größeren Schwellwert, im weiteren bezeichnet als Verbrennungsmotorstart-Schwellwert) dient dazu, den Verbrennungsmotorstart nicht zu Blockieren, wenn anhand eines großen Momentenfehlbetrags ersichtlich ist, dass der Verbrennungsmotor den Elektromotor unterstützen muss, um ein Abfallen (d.h. Verringerung der Geschwindigkeit) oder ein Rückwärtsrollen zu verhindern. Innerhalb des Fensters wird erfindungsgemäß eine Antriebsmodusänderung blockiert, um eine Ruckbewegung, die durch Kuppeln/Starten hervorgerufen wird, zu verhindern. Ferner wird durch die obere Grenze verhindert, dass trotz einem hohen angeforderten Antriebsmoment, z.B. zur Beschleunigung bei einem Überholvorgang, der Verbrennungsmotor nicht gestartet wird und der Elektromotor alleine das erhöhte Antriebsmoment aufbringt. Insbesondere wenn ermittelt wird, dass der Elektromotor das (erhöhte) Antriebsmoment nicht alleine aufbringen kann (Belastungsgrenze überschritten) oder soll (Betrieb nahe Maximalleistung unerwünscht), wird die Blockierung wieder aufgehoben. Die erwähnten Mechanismen zur Aufhebung der Blockierung können einzeln oder kombiniert vorgesehen werden. Statt des (weiteren) Verbrennungsmotorstart-Schwellwerts kann auch der Schritt des Vergleichens und/oder der bereits vorhandene erfindungsgemäße Schwellwert oder der Momentenfehlbetrag manipuliert bzw. modifiziert werden, um die obere Grenze zu implementieren.

Sollte sich beispielsweise eine stärkere Steigung (und somit ein großer Momentenfehlbetrag) ergeben, so überschreitet der Momentenfehlbetrag den weiteren Schwellwert, d.h. den Verbrennungsmotorstart-Schwellwert, wobei die Überschreitung zur Folge hat, dass die erfindungsgemäße Blockierung wieder aufgehoben wird, da die stärkere Steigung einen Verbrennungsmotorstart, auch unter Inkaufnahme einer Ruckbewegung durch den Start/Koppeln, notwendig macht. Dies trifft ebenso für eine stärkere Drehmomentanforderung zu. Der Verbrennungsmotorstart-Schwellwert wird vorzugsweise bei geringem Ladezustand des Energiespeichers, der den Elektromotor versorgt, verringert. Ferner kann der Nbmentenfehlbetrag "künstlich" im Rahmen des Vergleichs verringert werden (modifiziert werden), um den Verbrennungsmotorstart durch Aufhebung der Blockierung zu erleichtern. Der Verbrennungsmotor entlastet zum einen den Elektromotor und erhöht zum anderen den Ladezustand durch Aufladen. Für den ersten Übergang bilden somit der erfindungsgemäß allgemein verwendete Schwellwert (= Blockierungsschwellwert) und der Verbrennungsmotorstart-Schwellwert (= obere Grenze), der größer als der Blockierungsschwellwert ist, ein Fenster, in dem das erfindungsgemäße Verfahren eine Blockierung des Fahrmodus vorsieht. Vorzugsweise wird aus dem Ladezustand des elektrischen Energiespeichers, der den Elektromotor versorgt, auf das Reservemoment geschlossen, um das das Antriebsmoment des Elektromotors noch erhöht werden kann. Der Verbrennungsmotorstart-Schwellwert wird vorzugsweise in dem Maße verringert, je näher der Ladezustand an dem Zustand "leer" ist, um einen Verbrennungsmotorstart zum Stützen des schwachen Elektroantriebs zu ermöglichen bzw. zu erleichtern.

Anstatt der Einführung eines Verbrennungsmotorstart-Schwellwerts, um einen Verbrennungsmotorstart, der aufgrund eines zu schwachen Elektromotors notwendig ist, kann der Schwellwert (Blockierungsschwellwert) ab einem Grenz-Momentenfehlbetrag "künstlich" erhöht werden, so dass der Momentemehlbetrag wieder unter den Schwellwert fällt und die Bedingung zur Antriebsmodusänderung gegeben ist. Der beschriebene Grenz-Nbmentenfehlbetrag liegt um einen Mindestabstand, der die Fensterbreite definiert, über dem Blockierungsschwellwert, und ist gleich oder kleiner als die Reservespanne (= Reservemoment) des Elektromotors zwischen dem momentan geleisteten Drehmoment und dem Maximaldrehmoment, die der Elektromotor (zusammen mit seinem elektrischen Energiespeicher) unter den aktuellen Bedingungen maximal leisten kann. Ist mit anderen Worten der Nbmentenfehlbetrag größer als die Leistung, die der Elektromotor alleine noch aufbringen kann (abhängig von Elektromotortemperatur, Ladezustand und Entladestrom des elektrischen Energiespeichers), dann wird erfindungsgemäß die Blockierung des Verbrennungsmotorstarts wieder aufgehoben. Die zu diesem Zweck ausgeführte Erhöhung des Schwellwerts ab dem Grenz-Momentenfehlbetrag entspricht vorzugsweise der Differenz des maximal vom Elektromotor zu leistenden Drehmoments und der darüber liegenden Nbmentanforderung. Die Erhöhung, d.h. der Erhöhungswert kann mit einem Multiplikationsfaktor größer als eins verbunden sein, damit die Blockierung auch bei einem geringen Erhöhungswert aufgehoben wird und der Antriebmodus geändert wird. In gleicher Weise kann die Erhöhung des Schwellwerts (vorzugsweise überproportional) der Differenz zwischen bestimmtem Momentenfehlbetrag und Reservemoment des Elektromotors (= Differenz zwischen aktuellem Moment und maximal möglichen Moment) entsprechen. Der Proportionalitätsfaktor ist größer als 1, bsp. 2, oder größer als 2. Anstatt den Schwellwert zu erhöhen kann auch der Nbmentenfehlbetrag, der für den Vergleich verwendet wird Vergleichs-Momentenfehlbetrag), gegenüber dem bestimmten Nbmentenfehlbetrag verringert werden, wenn der bestimmte Momentenfehlbetrag eine Grenze (bsp. den Grenz-Momentenfehlbetrag) überschreitet. Mit anderen Worten kann, anstatt der Einführung eines weiteren Schwellwerts, der Schritt des Vergleichens manipuliert werden, d.h. entweder durch künstliches Erhöhen des Schwellwerts ab einem Grenz-Nbmentenfehlbetrag, oder durch Verringern der Größe, mit der der Schwellwert verglichen wird, ab Überschreiten des Grenz-Momentenfehlbetrags. Der Grenz-Nbmentenfehlbetrag entspricht einem Nbmentenfehlbetrag, der den Start des Verbrennungsmotors zur Stützung des Elektromotors erforderlich macht, da der Elektromotor ohne Start des Verbrennungsmotors in einem unerwünscht hohen Betriebsbereich arbeiten müsste, oder die angeforderte Leistung des Elektromotor über einer Maximalleistung des Elektromotors liegen würde.

Der hier beschriebene Eingriff in den Vergleichschritt ermöglicht eine einfachere Implementierung als einen einzelnen Vergleichschritt. Alternativ kann ein zweiter Vergleichschritt vorgesehen werden, dessen Ergebnis das Ergebnis des bereits definierten Vergleichschritts dominiert, wobei der Vergleichschritt ermittelt, ob der Momentenfehlbetrag von dem Reservemoment des Elektromotors aufgenommen werden kann, oder nicht. Wenn der Momentenfehlbetrag gleich oder größer als das Reservemoment ist, dann wird die Blockierung aufgehoben und eine Antriebsmodusänderung durchgeführt. Innerhalb des zweiten Vergleichsschritts, der nur für den ersten Übergang durchgeführt wird, kann das Reservemoment noch um eine Sicherheitsmarge verringert werden, um zu verhindern, dass der Elektromotors mit seiner Maximalleistung arbeitet, obwohl der Verbrennungsmotor eingeschaltet werden kann und der Elektromotor entlastet würde. Mit anderen Worten kann beim Vorsehen des Reservemoments eine Leistung zu Grunde gelegt werden, die um eine vorbestimmte Spanne geringer als die Maximalleistung des Elektromotors ist. Diese Aufhebung der Blockierung, die vorzugsweise nur für den ersten Übergang und nicht für den zweiten Übergang vorgesehen wird, kann implementiert werden mittels: einem Erfassungselement, das das Antriebsmodus-Änderungssignal erfasst und im Falle des ersten Übergangs die Mittel zur Aufhebung aktiviert, einem Speicher oder einer Eingabe für die obere Grenze (Grenz-Momentenfehlbetrag), einem Vergleicher zur Erfassung, ob der bestimmte Momentemehlbetrag über dem Grenz-Momentenfehlbetrag liegt, und einem Subtrahierer, der den zum Vergleichen verwendeten Momentenfehlbetrag künstlich (und überpropertional) gegenüber dem bestimmten Momentemehlbetrag verringert, oder mit einem Addierer, der den zum Vergleichen verwendeten Schwellwert künstlich erhöht. Anstatt der Manipulation des Vergleichs durch Addierer oder Subtrahierer kann ein Vergleicher verwendet werden, der für den Fall des ersten Übergangs als Fenster-Vergleicher arbeitet, und die erfindungsgemäße Blockierung für Momentfehlbeträge innerhalb eines Fensters (definiert durch Schwellwert als Untergrenze und darüber liegendem Grenz-Momentenfehlbetrag als Obergrenze) auslöst. Für den Fall des zweiten Übergangs arbeitet der Vergleicher als Schwellwert-Vergleicher, der das Blockieren des Übergangs zum Nur-Elektrobetrieb bei Momentfehlbeträgen über dem Schwellwert vorsieht. Für den Fall des zweiten Übergangs ist kein Vergleich mit einem Grenz-Momentenfehlbetrag vorgesehen. Hierzu kann entweder der Vergleichsmodus des Vergleichers geändert werden, oder der Grenz-Momentenfehlbetrag, d.h. die Obergrenze des Fenster-Vergleichers, kann zur Deaktivierung im Fall des zweiten Übergangs auf einen Wert erhöht werden, der tatsächlich nie erreicht werden kann. Hierzu kann ein Addierer verwendet werden, der im Fall des zweiten Übergangs den Grenz-Momentenfehlbetrag künstlich auf einen tatsächlich nie erreichbaren Wert erhöht, bevor dieser zum Vergleichen verwendet wird.

Das erfindungsgemäße Verfahren kann mittels eines Steuerungsmoduls vorgesehen werden, das mittels Hardware, Software oder eine Kombination hiervon vorgesehen werden kann. Beispielsweise wird das Steuerungsmodul durch ein Programmstück vorgesehen, welches in einer Steuerungsvorrichtung abläuft, das auch weitere Funktionen, beispielsweise Motorsteuerung, realisiert. Gemäß der Umsetzung umfasst das Steuerungsmodul Ein- und Ausgabeschnittstellen in Form von physikalischen oder logischen Schnittstellen (bei Hardwarerealisierungen) oder in Form von Funktionsköpfen oder Softwarernodulköpfen, die eine Parameter-übergabe erlauben (im Falle von Softwarerealisierung). Die Software bzw. Softwarekomponenten können auf einem eigenen Mikroprozessor ablaufen oder können auf einem Prozessor ablaufen, der bereits Funktionen anderer Steuerungskomponenten umfasst, beispielsweise Funktionen der Motorsteuerung.

Der erfindungsgemäß angesteuerte Hybridantrieb umfasst vorzugsweise einen oder mehrere Elektromotoren, wobei als Antriebleistung die Gesamtantriebsleistung der Elektromotoren betrachtet wird. Beispielsweise können für jedes Antriebsrad ein Elektromotor verwendet werden, wobei alle Elektromotoren in ihrer Gesamtleistung erfindungsgemäß angesteuert werden. Zur Steuerung der Antriebsleistung bzw. des Antriebsmoments kann das vom Elektromotor erzeugte Moment durch Steuerung des Elektromotors selbst verwendet werden, oder eine Kupplung kann angesteuert werden, um die von dem Elektromotor an den Abtrieb abgegebene Leistung bzw. das abgegebene Drehmoment zu Steuern, oder ein Kombination hiervon.

### Kurze Beschreibung der Zeichnungen

Ausführungsbeispiele der Erfindung sind in den Zeichnungen dargestellt und in der nachfolgenden Beschreibung näher erläutert.

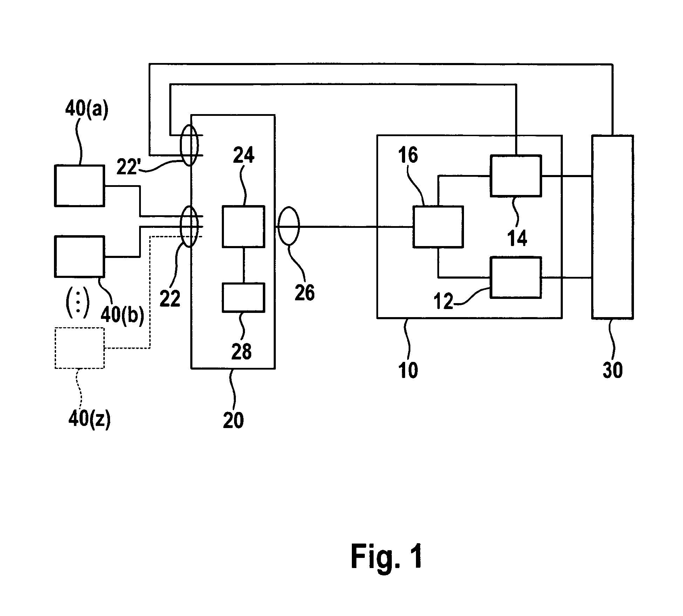

Es zeigt
- Figur 1: ein Funktionsblockschaltbild zur Erläuterung des erfindungsgemäßen Verfahrens.

### Ausführungsformen der Erfindung

In der Figur 1 ist ein Funktionsblockschaltbild dargestellt, das die Steuerung eines Hybridantriebs 10 durch eine erfindungsgemäße Steuerung 20 darstellt.

Der Hybridantrieb umfasst einen Verbrennungsmotor 12 und mindestens einen Elektromotor 14, die beide zum Antrieb ausgelegt sind. Der Verbrennungsmotor 12 und der Elektromotor 14 sind zur Momentübertragung und zur Antriebsmodusauswahl miteinander durch ein Kupplungselement 30 verbunden, das beispielsweise im Falle eines Starts die Welle des Elektromotors indirekt mit der Welle des Verbrennungsmotors 12 verbindet. Die in Figur 1 gezeigte Darstellung dient lediglich zur Zuordnung von Funktionen und soll keine speziellen mechanischen Verbindungen darstellen. Die Steuerung 20 erhält über eine Eingangsschnittstelle 22 Signalwerte von Komponenten 40 (a) - 40 (z). Die Komponenten 40 (a - z) können eigens dafür vorgesehene Kraft- oder Neigungssensoren sein, die eine Fahrbahnneigung oder eine Kraft messen, aus der sich die Beladung des Fahrzeugs erschließen lässt. Die Komponenten 40 (a) - (z) können ferner in dem Fahrzeug vorgesehene Komponenten mit anderer Funktion sein, beispielsweise eine Diebstahlsicherung, die einen Neigungswinkelwert vorsieht, einen Sitzbelegungssensor, der die Belegung von Fahrzeugsitzen angibt oder eine ESP-Steuerung, die beispielsweise als Zwischenergebnis einen Belastungswert, der die Träger des Fahrzeugs angibt, oder einen Reibungswert, der die zusätzliche Reibung durch unebenen Fahrzeuguntergrund angibt. Ferner besteht zwischen Elektromotor 14 und Steuerung 20 eine Übertragungsleitung, die einen Reservemomentwert vom Elektromotor 14 an die Steuerung 20 überträgt. Der Reservemomentwert entspricht der Nenn-Miximalleistung des Elektromotors minus der momentan geleisteten Betriebsleistung und entspricht somit dem Puffer, der durch entsprechende Hochregelung des Elektromotors noch für den Antrieb zur Verfügung steht. Alternativ kann statt eines Reservemomentwerts auch ein Betriebsparameter oder eine Gruppe von Betriebsparametern vom Elektromotor 14 an die Steuerung 20 übertragen werden, aus der sich das Reservemoment ermitteln lässt. Entsprechende Betriebsparameter sind beispielsweise Phasenansteuerungsparameter, Querstromvorgaben, Statorstromvorgaben, Tastverhältnisse, Regelungsgrößen und ähnliche Leistungsansteuerungsparameter des Elektromotors.

Ferner ist das Kupplungselement 30 mit der Steuerung 20 über eine Übertragungsleitung verbunden, die das geleistete Antriebsmoment überträgt, um es der Steuerung 20 zu erlauben, das erfasste Antriebsmoment in Beziehung zu der dadurch erreichten Beschleunigung zu setzcn, um zu erfassen, wie stark das Fahrzeug beladen ist bzw. um die Belastung durch die Gesamtmasse des Fahrzeugs zu ermitteln. Das Kupplungselement 30 kann somit neben der Kopplung des Elektromotors mit dem Verbrennungsmotor für den Startvorgang auch eine Kopplung des Elektromotors, des Verbrennungsmotors oder beider Aggregate mit einem Abtrieb vorsehen. Anstatt das Antriebsmoment durch das Kupplungselement 30 erfassen zu lassen, kann auch der Verbrennungsmotor 12 und/oder der Elektromotor 14 herangezogen werden. Ferner kann eine gemeinsame Steuerung 16 der beiden Antriebsaggregate verwendet werden, um im Belastungszustand die geleistete Antriebsleistung in Form von Signalen vorzusehen.

Zwischen der Steuerung 20 und dem Antrieb 10 ist ferner eine Verbindung vorgesehen, die das in der Steuerung 20 vorgesehene Steuersignal an die gemeinsame Steuerung 60 beider Aggregate 12 und 14 überträgt. Wie bereits bemerkt werden einige Signale von den Komponenten 40 (a) - (z) der Steuerung eingegeben, sowie durch die Übertragungsleitungen zwischen Elektromotor 14 und Steuerung 20 und Kopplungselement 30 und Steuerung 20. Daher können auch die Eingänge dieser Übertragungsleitungen als Eingangsschnittstelle 22' angesehen werden. Die in die Steuerung 20 eingegebenen Signale werden vorzugsweise von einer zentralen Verarbeitungseinheit 24 verarbeitet, welche über eine Ausgangsschnittstelle 26 entsprechende Steuersignale weitergibt. Die Verarbeitungseinheit 24 übernimmt die Auswertung, den Vergleich und gegebenenfalls die Umrechnung von eingegebenen Signalwerten, um gemäß dem erfindungsgemäßen Verfahren den Hybridantrieb 10 anzusteuern. Die Steuerung 20 umfasst ferner eine Einheit 28 zum Vorsehen des Schwellwerts, der beispielsweise gespeichert sein kann und der gegebenenfalls wie oben beschrieben modifiziert sein kann. Um den Schwellwert in Einheit 28 abzurufen, besteht eine Verbindung zwischen Einheit 28 und zentraler Berechnungseinheit 24.

Bis auf die Verbindungen zwischen Verbrennungsmotor 12 bzw. Elektromotor 14 und dem Kupplungselement 30, die mechanisch sind, sind alle Verbindungen vorzugsweise elek-trisch und können mittels einzelner Leitungen oder mit einem Bussystem realisiert sein.

## Patentansprüche

1. Verfahren zur Steuerung des Antriebsmodus eines Hybridantriebs, der einen Verbrennungsmotor (12) und mindestens einen Elektromotor (14) zum Antrieb eines Fahrzeugs umfasst, mit den Schritten des
Erfassens eines Antriebsmodus-Änderungssignals, das eine geplante Antriebsmodusänderung kennzeichnet, dem
Bestimmen eines Momentenfehlbetrags, der durch die Antriebsmodusänderung auftreten würde und einem
Vergleich des Momentenfehlbetrags mit einem Schwellwert, **dadurch gekennzeichnet, dass** ein Blockieren einer Antriebsmodusänderung erfolgt, falls der Schritt des Vergleichens ergibt, dass der Momentenfehlbetrag über dem Schwellwert liegt; und automatisches Durchführen einer Antriebsmodusänderung gemäß dem Antriebsmodus-Änderungssignal, falls der Schritt des Vergleichens ergibt, dass der Momentenfehlbetrag nicht über dem Schwellwert liegt, wobei das Bestimmen eines Momentenfehlbetrags umfasst: Erfassen eines Belastungsmoments, das der Belastung des Hybridantriebs durch die Bewegung des Fahrzeugs unter Berücksichtigung der entsprechenden Fahrbahneigenschaften entspricht.

2. Verfahren nach Anspruch 1, wobei das Antriebsmodus-Änderungssignal einen ersten Übergang von Nur-Elektromotorbetrieb zu Kombinationsbetrieb oder einen zweiten Übergang von Kombinationsbetrieb zu Nur-Elektromotorbetrieb kennzeichnet.

3. Verfahren nach Anspruch 2, wobei der Schritt des Bestimmens des Momentenfehlbetrags umfasst: wenn das Antriebsmodus-Änderungssignal den ersten Übergang kennzeichnet, Vorsehen eines Startmoments, das bei einem Startvorgang des Verbrennungsmotor (12) an diesem auftritt; Ermitteln eines Reservemoments, das vom Elektromotor (14) bis zum Erreichen einer Maximalleistung noch zusätzlich geleistet werden kann; und Vorsehen des Momentenfehlbetrags als Summe des Belastungsmoments und des Startmoments, abzüglich des Reservemoments.

4. Verfahren nach Anspruch 2 oder 3, wobei der Schritt des Bestimmens des Momentenfehlbetrags umfasst: wenn das Antriebsmodus-Änderungssignal den zweiten Übergang kennzeichnet, Erfassen eines Antrieb-Fehlmoments, das einem von dem Verbrennungsmotor (12) geleisteten Verbrennungsmotor-Antriebsmoment entspricht; Ermitteln eines Reservemoments, das vom Elektromotor (14) bis zum Erreichen einer Maximalleistung noch zusätzlich geleistet werden kann, durch Ermitteln eines Ladezustands eines elektrischen Speichers, der den Elektromotor (14) mit Traktionsenergie versorgt, und durch Vorsehen eines Norm-Betriebsbereichs des Elektromotors (14) oder eines momentan zulässigen Maximal-Betriebsbereichs; und Vorsehen des Momentenfehlbetrags als Summe des Belastungsmoments und des Antrieb-Fehlmoments, abzüglich des Reservemoments.

5. Verfahren nach Anspruch 1, wobei das Erfassen eines Belastungsmoments umfasst:
Erfassen eines Belastungsmoments durch Ermitteln der Neigung des Fahrzeugs mittels einem dafür vorgesehenen Neigungssensor (40a-z), mittels einem Winkelsignal einer Überschlagserkennung (40a-z), mittels einem Winkelsignal einer Diebstahlsicherung (40a-z), oder mittels einer Kombination hiervon; Erfassen eines Belastungsmoments durch Erfassen einer Beschleunigung mittels eines Beschleunigungssignals einer Antischlupfregelung (40a-z), einer ESP-Steuerung (40a-z), einer Antriebssteuerung oder eines dafür vorgesehenen Beschleunigungssensors (40a-z) und durch Ermitteln einer Antriebsleistung, eines Antriebsleistungssteuersignals, eines Antriebsmoments, die bzw. das die Beschleunigung hervorruft, oder einer Kombination hiervon; Erfassen eines Belastungsmoments durch Ermitteln eines Massewerts mittels eines Sitzbelegungssignals, das die Belegung von Fahrzeugsitzen innerhalb des Fahrzeugs kennzeichnet, mittels eines Anhängerkopplungssignals, das die Ankopplung eines Anhängers an das Fahrzeug kennzeichnet, mittels eines Masse- oder Trägheitswerts einer Antischlupfregelung, einer ESP-Steuerung oder einer Antriebssteuerung, der innerhalb der jeweiligen Regelung bzw. Steuerung verwendet wird oder von dieser ausgegeben wird; Erfassen eines Belastungsmoments durch Ermitteln von Fahrbahneigenschaften oder Ermitteln eines Fahrbahnbeschaffenheitswerts eines Off-Road-Schalters (40a-z), der zum Einstellen des Fahrverhaltens des Fahrzeugs verwendet wird, einer Antischlupfregelung oder einer ESP-Steuerung, der als Berechnungsbasis innerhalb dieser Regelung bzw. Steuerung verwendet wird; Erfassen des Belastungsmoments anhand von Daten, die die Fahrbahnsteigungen, Geländebeschaffenheit oder beides wiedergeben, wobei die Daten von einem Navigationssystem (40a-z), einem GPS-gestützten Navigationssystem oder einem anderen Orientierungssystems (40a-z) des Fahrzeugs oder von einem Verkehrsleitsystems innerhalb oder außerhalb des Fahrzeugs erzeugt werden; Erfassen eines Belastungsmoments durch Ermitteln der Geschwindigkeit des Fahrzeugs und dem sich daraus aufgrund von Luftreibung, Rollreibung oder aufgrund von beiden Reibungsarten ergebenden Antriebsmoment, das zur Aufrechterhaltung der Geschwindigkeit notwendig ist, oder einer Kombination hiervon.

6. Verfahren nach Anspruch 1, wobei der Schwellwert zwischen Null und einem Wert liegt, der einem Momentsprung bei der Antriebsmodusänderung entspricht, welcher zu einer Geschwindigkeitsverringerung oder zeitbezogenen Geschwindigkeitsverringerung führt, die unter einem vorbestimmten Wert liegt.

7. Verfahren nach Anspruch 1, wobei das Antriebmodus-Änderungssignal von einem Betätigungselement (40a-z) stammt, mit dem ein Bediener den gewünschten Antriebmodus einstellen kann, oder das Antriebmodus-Änderungssignal von einer Antriebssteuerung stammt, die aufgrund von Einstellungen, Messwerten oder Zuständen von Komponenten des Fahrzeugs oder des Fahrzeugs selbst den Antriebsmodus steuert.

8. Verfahren nach Anspruch 1, wobei das Startmoment vorgesehen wird durch einen vordefinierten Wert, durch Schätzung des Moments, das aufgrund von Verbrennungsmotortemperatur, Außentemperatur oder weiteren Verbrennungsmotor-Betriebseigenschaften zum Durchführen eines erfolgreichen Startvorgangs des Verbrennungsmotors (12) erforderlich ist.

9. Verfahren nach Anspruch 1, wobei, wenn die Antriebsänderung einen Übergang von Nur-Elektrobetrieb auf Kombibetrieb darstellt, der Schritt des Blockierens spätestens nach Ablauf eines vorbestimmten Zeitintervalls mit vorgegebener Länge beendet wird, das mit dem Blockieren oder mit dem Erfassen eines Antriebsmodus-Änderungssignals beginnt, oder spätestens mit dem Erfassen eines Ladezustands eines Energiespeichers, der den Elektromotor (14) mit Traktionsenergie versorgt, unterhalb eines vorbestimmten Mindest-Ladezustands, oder spätestens mit dem Erfassen einer Drehmomentanforderung über einem vorbestimmten Drehmomentanforderungs-Schwellwert endet, oder, wenn die Antriebsänderung einen Übergang von Kombibetrieb auf Nur-Elektrobetrieb darstellt, der Schritt des Blockierens aufgehoben wird, solange eine Summe aus Momentenfehlbetrag und einem momentan vom Elektromotor (14) erzeugten Antriebsdrehmoment über einem maximal vom Elektromotor (14) zu leistenden Antriebsmoment liegt, das vordefiniert ist, oder das von dem Ladezustand des Energiespeichers vorgegeben ist; oder solange der Momentenfehlbetrag über einer vordefinierten Obergrenze liegt.

10. Steuerungsmodul (20) zum Anschluss an einen Hybridantrieb, der einen Verbrennungsmotor (12) und mindestens einen Elektromotor (14) zum Antrieb eines Fahrzeugs umfasst, zur Ausführung des Steuerungsverfahrens gemäß Anspruch 1, wobei das Steuerungsmodul (20) eingerichtet ist, an den Hybridantrieb ein Antriebsmodus-Steuersignal abzugeben, wobei das Steuerungsmodul (20) umfasst:
eine Eingangsschnittstelle (22) zur Eingabe eines Antriebmodus-Änderungssignals, eines Belastungsmoments, und eines Verringerungsmoments, das mindestens eines aus der Gruppe Startmoment und Antriebs-Fehlmoment umfasst,
eine Ausgangsschnittstelle (26) zur Ausgabe des Antriebsmodus-Steuersignals, um einen Antriebsmodus des Hybridantriebs zu steuern,
und mit einer Berechnungseinheit (24), die mit der Eingangsschnittstelle (22) und der Ausgangsschnittstelle (26) verbunden ist, und die Berechnungseinheit (24) eingerichtet ist, das Bestimmen eines Momentenfehlbetrages der durch eine Antriebsmodusänderung auftreten würde aus der Erfassung eines Belastungsmomentes durchzuführen,
wobei das Steuerungsmodul weiter eingerichtet ist, die folgenden Schritte auszuführen:
Erfassen eines Antriebsmodus-Änderungssignals, das eine geplante Antriebsmodusänderung kennzeichnet;
Vergleichen des Momentenfehtbetrags mit einem Schwellwert;
Blockieren einer Antriebsmodusänderung, falls der Schritt des Vergleichens ergibt, dass der Momentenfehlbetrag über dem Schwellwert liegt; und automatisches Durchführen einer Antriebsmodusänderung gemäß dem Antriebsmodus-Änderungssignal, falls der Schritt des Vergleichens ergibt, dass der Momenteniehtbetrag nicht über dem Schwellwert liegt, wobei das Bestimmen eines Momentenfehlbetrags umfasst: Erfassen eines Belastungsmoments, das der Belastung des Hybridantriebs durch die Bewegung des Fahrzeugs unter Berücksichtigung der entsprechenden Fahrbahneigenschaften entspricht.

## Claims

1. Method for controlling the drive mode of a hybrid drive, which comprises an internal combustion engine (12) and at least one electric motor (14) for driving a vehicle, comprising the steps of
detecting a drive mode change signal which identifies a planned change in drive mode,
determining a torque shortage which would be produced by the change in drive mode, and
comparing the torque shortage with a threshold value, **characterized in that** a change in drive mode is blocked if the comparison step shows that the torque shortage is greater than the threshold value; and a change in drive mode in accordance with the drive mode change signal is automatically carried out if the comparison step shows that the torque shortage is not greater than the threshold value, with determination of a torque shortage comprising: detecting a load torque which corresponds to the load on the hybrid drive due to the movement of the vehicle, taking into account the relevant carriageway properties.

2. Method according to Claim 1, with the drive mode change signal identifying a first transition from only-electric-motor operation to combined operation or a second transition from combined operation to only-electric-motor operation.

3. Method according to Claim 2, with the step of determining the torque shortage comprising: when the drive mode change signal identifies the first transition, providing a start torque which acts on the internal combustion engine (12) during a start process of the said internal combustion engine; ascertaining a reserve torque which can still be additionally provided by the electric motor (14) until a maximum power is reached; and providing the torque shortage as a sum of the load torque and the start torque, minus the reserve torque.

4. Method according to Claim 2 or 3, with the step of determining the torque shortage comprising: when the drive mode change signal identifies the second transition, detecting a drive torque deficit which corresponds to an internal combustion engine drive torque which is provided by the internal combustion engine (12); ascertaining a reserve torque which can still be additionally provided by the electrical motor (14) until a maximum power is reached by ascertaining a state of charge of an electrical storage means which supplies traction energy to the electric motor (14), and by providing a standard operating range of the electric motor (14) or a currently permissible maximum operating range; and providing the torque shortage as a sum of the load torque and the drive torque deficit, minus the reserve torque.

5. Method according to Claim 1, with the detection of a load torque comprising: detecting a load torque by ascertaining the inclination of the vehicle using an inclination sensor (40a-z) which is provided for this purpose, using an angle signal from a rollover identification means (40a-z), using an angle signal from an anti-theft means (40a-z) or using a combination of the above; detecting a load torque by detecting an acceleration using an acceleration signal from a traction control system (40a-z), an electronic stability program (ESP) controller (40a-z), a drive controller or an acceleration sensor (40a-z) which is provided for this purpose, and by ascertaining a drive power, a drive power control signal, a drive torque, each of which creates the acceleration, or a combination of the above; detecting a load torque by ascertaining a mass value using a seat occupation signal which identifies whether vehicle seats within the vehicle are occupied, using a trailer coupling signal which identifies whether a trailer is coupled to the vehicle, using a mass or inertia value from a traction control system, an ESP controller or a drive controller which is used within the respective control system or controller or is output by the said control system or controller; detecting a load torque by ascertaining carriageway properties or ascertaining a carriageway condition value of an off-road switch (40a-z), which is used for adjusting the driving behaviour of the vehicle, a traction control system or an ESP controller which is used as a basis for calculation within the said control system or controller; detecting the load torque on the basis of data which reflects the carriageway gradient, ground condition or both, with the data being generated by a navigation system (40a-z), a GPS-assisted navigation system or another orientation system (40a-z) of the vehicle or by a traffic guidance system within or outside the vehicle; detecting a load torque by ascertaining the speed of the vehicle and the drive torque resulting from the said speed on the basis of atmospheric friction, rolling friction or on the basis of both types of friction, this drive torque being necessary for maintaining the speed, or a combination of the above.

6. Method according to Claim 1, with the threshold value being between zero and a value which corresponds to a change in torque during the change in drive mode, which change in torque leads to a reduction in speed or a time-related reduction in speed which is below a predetermined value.

7. Method according to Claim 1, with the drive mode change signal originating from an operating element (40a-z) with which an operator can set the desired drive mode, or the drive mode change signal originating from a drive controller which controls the drive mode on the basis of settings, measurement values or states of components of the vehicle or of the vehicle itself.

8. Method according to Claim 1, with the start torque being provided by a predefined value, by estimating the torque which, on the basis of the internal combustion engine temperature, external temperature or further internal combustion engine operating properties, is required to carry out a successful starting process of the internal combustion engine (12).

9. Method according to Claim 1, with, when the change in drive is a transition from only-electric operation to combined operation, the blocking step being terminated at the latest after expiry of a predetermined time period of prespecified length which begins with the blocking or with the detection of a drive mode change signal, or ends at the latest with the detection of a state of charge of an energy storage means, which supplies traction energy to the electric motor (14), below a predetermined minimum state of charge, or at the latest with the detection of a torque requirement above a predetermined torque requirement threshold value, or, when the change in drive is a transition from combined operation to only-electric operation, the blocking step being cancelled as long as a sum of the torque shortage and a drive torque currently generated by the electric motor (14) is above a maximum drive torque which can be provided by the electric motor (14) and which is predefined or which is prespecified by the state of charge of the energy storage means; or as long as the torque shortage is above a predefined upper limit.

10. Control module (20) for connection to a hybrid drive, which comprises an internal combustion engine (12) and at least one electric motor (14) for driving a vehicle, for executing the control method according to Claim 1, with the control module (20) being designed to issue a drive mode control signal to the hybrid drive, with the control module (20) comprising:
an input interface (22) for inputting a drive mode change signal, a load torque and a reduction torque which comprises at least one of the group comprising start torque and drive torque deficit,
an output interface (26) for outputting the drive mode control signal in order to control a drive mode of the hybrid drive,
and having a calculation unit (24) which is connected to the input interface (22) and the output interface (26), and the calculation unit (24) being designed to determine a torque shortage which would be produced by the change in drive mode from the detection of a load torque,
with the control module further being designed to execute the following steps:
detecting a drive mode change signal which identifies a planned change in drive mode, and
comparing the torque shortage with a threshold value;
blocking a change in drive mode if the comparison step shows that the torque shortage is greater than the threshold value; and automatically carrying out a change in drive mode in accordance with the drive mode change signal if the comparison step shows that the torque shortage is not greater than the threshold value, with determination of a torque shortage comprising: detecting a load torque which corresponds to the load on the hybrid drive due to the movement of the vehicle, taking into account the relevant carriageway properties.

## Revendications

1. Procédé de commande du mode d'entraînement d'un entraînement hybride comprenant un moteur à combustion interne (12) et au moins un moteur électrique (14) pour entraîner un véhicule, et selon les étapes consistant à :
détecter un signal de changement de mode d'entraînement qui indique un changement de mode d'entraînement planifié ;
déterminer un déficit de couple pouvant se produire du fait d'un changement de mode d'entraînement ; et
comparer le déficit de couple à une valeur seuil ;
**caractérisé en ce qu'**un blocage d'un changement de mode d'entraînement se produit si l'étape de comparaison permet de conclure à un déficit de couple au-delà de la valeur seuil ; et **en ce qu'**un changement de mode d'entraînement conforme au signal de changement de mode d'entraînement est mis en oeuvre automatiquement si l'étape de comparaison permet d'établir que le déficit de couple ne dépasse pas une valeur seuil, la détermination d'un déficit de couple comprenant : la détection d'un couple de charge correspondant à la charge de l'entraînement hybride par le mouvement du véhicule en tenant compte des propriétés de chaussée correspondantes.

2. Procédé selon la revendication 1, le signal de changement de mode d'entraînement indiquant une première transition du mode de moteur électrique exclusif en mode combiné ou une deuxième transition du mode combiné au mode de moteur électrique exclusif.

3. Procédé selon la revendication 2, l'étape de détermination du déficit de couple comprenant : lorsque le signal de changement de mode d'entraînement indique la première transition, prévision d'un couple de démarrage se produisant à son niveau lors d'un processus de démarrage du moteur à combustion interne (12) ; calcul d'un couple de réserve pouvant encore être produit par le moteur électrique (14) jusqu'à atteinte d'une puissance maximale ; et prévision du déficit de couple sous la forme de la somme du couple de charge et du couple de démarrage, déduction faite du couple de réserve.

4. Procédé selon la revendication 2 ou 3, l'étape de détermination du déficit de couple comprenant :
lorsque le signal de changement de mode d'entraînement indique la deuxième transition, détection d'un défaut de couple d'entraînement correspondant à un couple d'entraînement du moteur à combustion interne produit par le moteur à combustion interne (12) ; calcul d'un couple de réserve pouvant encore être produit par le moteur électrique (14) jusqu'à atteinte d'une puissance maximale, par calcul d'un état de chargement d'un accumulateur électrique alimentant le moteur électrique (14) en énergie de traction et par prévision d'une plage de fonctionnement normale du moteur électrique (14) ou d'une plage de fonctionnement maximale momentanément autorisée ; et prévision du déficit de couple sous la forme de la somme du couple de charge et du déficit de couple d'entraînement, déduction faite du couple de réserve.

5. Procédé selon la revendication 1, la détection d'un couple de charge comprenant : la détection d'un couple de charge par calcul de l'inclinaison du véhicule à l'aide d'un capteur d'inclinaison (40a-z) prévu à cet effet, au moyen d'un signal angulaire d'un dépistage d'attaque (40a-z), au moyen d'un signal angulaire d'une sécurité antivol (40a-z) ou au moyen d'une combinaison de ces moyens ; la détection d'un couple de charge par détection d'une accélération à l'aide d'un signal d'accélération d'un mécanisme de régulation antipatinage (40a-z), d'une commande ESP (40a-z), d'une commande d'entraînement ou d'un capteur d'accélération (40a-z) prévu à cet effet et par calcul d'une puissance d'entraînement, d'un signal de commande de puissance d'entraînement, d'un couple d'entraînement appelant l'accélération ou d'une combinaison de ceux-ci ; la détection d'un couple de charge par calcul d'une valeur de masse, à l'aide d'un signal d'occupation de siège qui indique si des sièges de véhicule sont occupés à l'intérieur du véhicule, à l'aide d'un signal d'accouplement de remorque qui indique l'accouplement d'une remorque au véhicule, à l'aide d'une valeur de masse ou d'inertie d'un mécanisme de régulation antipatinage, d'une commande ESP ou d'une commande d'entraînement utilisée à l'intérieur du mécanisme de régulation et/ou de commande respectif ou émis par eux ; la détection d'un couple de charge par calcul de propriétés de chaussée ou calcul d'une valeur de qualité de chaussée d'un contacteur tout terrain (40a-z) utilisé par régler le comportement de conduite du véhicule, d'un mécanisme de régulation antipatinage ou d'une commande ESP servant de base de calcul à l'intérieur de ce mécanisme de régulation et/ou de commande ; la détection du couple de charge à l'aide de données reflétant lorsque la chaussée monte, la qualité du terrain ou les deux, les données étant produites par un système de navigation (40a-z), un système de navigation par GPS ou un autre système d'orientation (40a-z) du véhicule ou par un système de guidage en temps réel placé à l'intérieur ou à l'extérieur du véhicule ; la détection d'un couple de charge, nécessaire au maintien de la vitesse, par calcul de la vitesse du véhicule et du couple d'entraînement résultant du frottement de l'air, des pneumatiques ou en raison de ces deux types de frottements, ou de la combinaison de ces éléments.

6. Procédé selon la revendication 1, la valeur seuil étant comprise entre zéro et une valeur correspondant à un saut de couple lors du changement de mode d'entraînement, ledit saut conduisant à une réduction de la vitesse ou une réduction de la vitesse dans le temps, en dessous d'une valeur prédéterminée.

7. Procédé selon la revendication 1, le signal de changement de mode d'entraînement émanant d'un élément d'actionnement (40a-z) avec lequel un utilisateur peut régler le mode d'entraînement souhaité ou le signal de changement de mode d'entraînement émanant d'une commande d'entraînement qui commande le mode d'entraînement, sur la base de réglages, valeurs de mesure ou états de composants du véhicule ou sur la base du véhicule lui-même.

8. Procédé selon la revendication 1, le couple de démarrage étant prévu par application d'une valeur prédéfinie, par évaluation du couple nécessaire en raison de la température du moteur à combustion interne, de la température extérieure ou d'autres propriétés de fonctionnement internes du moteur à combustion interne, pour permettre de réaliser un processus de démarrage réussi du moteur à combustion interne (12).

9. Procédé selon la revendication 1, l'étape de blocage se terminant, lors du changement d'entraînement indiquant une transition du mode uniquement électrique au mode combiné, au plus tard après écoulement d'un intervalle de temps prédéterminé de longueur prédéfinie, qui commence par le blocage ou par la détection d'un signal de changement de mode d'entraînement ou prend fin au plus tard par la détection d'un état de charge d'un accumulateur d'énergie qui alimente le moteur électrique (14) en énergie de traction, en dessous d'un état de charge minimal prédéterminé ou au plus tard à la détection d'une demande de couple de rotation dépassant une valeur seuil de demande de couple de rotation prédéterminée ou l'étape de blocage étant levée, lorsque le changement d'entraînement indique une transition du mode combiné au mode uniquement électrique, dès lors que la somme du déficit de couple et d'un couple de rotation d'entraînement momentanément produit par le moteur électrique (14) dépasse un couple d'entraînement maximal pouvant être produit par le moteur électrique (14) prédéfini ou en fonction de l'état de charge de l'accumulateur d'énergie ; ou dès lors que le déficit de couple dépasse une limite supérieure prédéfinie.

10. Module de commande (20) permettant d' assurer la liaison avec un entraînement hybride comprenant un moteur à combustion interne (12) et au moins un moteur électrique (14) pour l'entraînement d'un véhicule, pour mettre en oeuvre le procédé de commande selon la revendication 1, le module de commande (20) étant conçu pour envoyer à l'entraînement hybride un signal de commande de mode d'entraînement, le module de commande (20) comprenant :
une interface d'entrée (22) permettant d'entrer un signal de changement de mode d'entraînement, un couple de charge et un couple de réduction comprenant au moins un élément parmi le groupe composé par le couple de démarrage et le déficit de couple d'entraînement ;
une interface de sortie (26) permettant de sortir un signal de commande de mode d'entraînement, pour commander un mode d'entraînement de l'entraînement hybride ;
et avec une unité de calcul (24) reliée à l'interface d'entrée (22) et à l'interface de sortie (26), l'unité de calcul (24) étant conçue pour déterminer un déficit de couple pouvant se produire du fait d'un changement de mode d'entraînement à partir de la détection d'un couple de charge ;
le module de commande étant en outre conçu pour réaliser les étapes suivantes :
détection d'un signal de changement de mode d'entraînement indiquant un changement de mode d'entraînement planifié ;
comparaison du déficit de couple avec une valeur seuil ;
blocage d'un changement de mode d'entraînement lorsqu'il ressort de l'étape de comparaison que le déficit de couple dépasse la valeur seuil ; et
réalisation automatique d'un changement de mode d'entraînement conforme au signal de changement de mode d'entraînement si l'étape de comparaison indique que le déficit de couple ne dépasse pas la valeur seuil, la détermination d'un déficit de couple comprenant : la détection d'un couple de charge correspondant à la charge de l'entraînement hybride du fait du mouvement du véhicule en tenant compte des propriétés de chaussée correspondantes.
